# EUROPÄISCHE PATENTSCHRIFT

(11) **EP 1 250 745 B1**
(45) Veröffentlichungstag und Bekanntmachung des Hinweises auf die Patenterteilung: **13.10.2004**
(21) Anmeldenummer: 01907438.4
(22) Anmeldetag: 11.01.2001
(51) Int. Cl.: H02J 7/00

(54) **VORRICHTUNG ZUM REGENERIEREN VON AKKUMULATOREN**
DEVICE FOR REGENERATING ACCUMULATORS
DISPOSITIF POUR REGENERER DES ACCUMULATEURS

(30) Priorität: 12.01.2000 HU 0000015 U; 03.08.2000 DE 10037777
(43) Veröffentlichungstag der Anmeldung: 23.10.2002
(73) Patentinhaber: Wiedmann, Alwin, 73553 Alfdorf (DE); Wittinger, Joszef, 1112 Budapest (HU)
(72) Erfinder: WITTINGER, Joszef, 1112 Budapest (HU)
(74) Vertreter: Dreiss, Fuhlendorf, Steimle & Becker
(86) Internationale Anmeldenummer: PCT/EP2001/000282
(87) Internationale Veröffentlichungsnummer: WO 2001/052380

(56) Entgegenhaltungen:
- US-A- 5 491 399
- US-A- 5 677 612

## Beschreibung

Die Erfindung betrifft eine Vorrichtung zum Regenerieren von Akkumulatoren nach dem Oberbegriff von Anspruch 1.

Eine derartige Vorrichtung ist aus der US-PS 5,491,399 bekannt. Bei dieser Vorrichtung wird ein Akkumulator regeneriert, während gleichzeitig eine Erhaltungsladung des Akkumulators durchgeführt wird.

Im Folgenden wird unter "Regeneration" die Ablösung von Schichten an den Elektroden-Platten eines Akkumulators verstanden. Durch das Ablösen dieser Schichten erreicht die Kapazität des regenerierten Akkumulators annähernd die eines neuen; d. h. der Alterungsprozess des Akkumulators, der sich in einer abnehmenden Ladekapazität äußert, wird aufgehalten oder zumindest verlangsamt.

Bei Bleiakkumulatoren sind es Bleisulfatschichten an den Elektroden-Platten, die durch die Regeneration abgelöst werden sollen. Mit der erfindungsgemäßen Vorichtung können auch andere Akkumulatoren, wie beispielsweise Nickel-Cadmium-Akkumulatoren, regeneriert werden.

Bei bekannten Vorrichtungen zum Regenerieren von Akkumulatoren (US-PS 5,491,399 und US-PS 4,871,959) wird der Akkumulator während einer Erhaltungsladung mit einer gepulsten Spannung beaufschlagt. Der damit einhergehende Stromimpuls soll die auf den Elektroden-Platten des Akkumulators befindlichen Schichten ablösen. Da die bekannten Vorrichtungen zum Regenerieren von Akkumulatoren diese Regeneration parallel zu einem Ladevorgang des Akkumulators vornehmen, sind die Beschränkungen hinsichtlich Ladespannung und Ladestrom des Akkumulators zu berücksichtigen, was die Regeneration beeinträchtigt.

Aus der US-PS 5,677,612 ist eine Vorrichtung zum Regenerieren eines Akkumulators bekannt bei der der Akkumulator mit einer von einem Transformator erzeugten gepulsten Hochspannung beaufschlagt wird. Dabei entspricht die Polarität der gepulsten Hochspannung der Polarität des zu regenerierenden Akkumulators.

Der Erfindung liegt die Aufgabe zugrunde, eine Vorrichtung zum Regenerieren von Akkumulatoren bereitzustellen, bei welcher die Ablösung der Schichten auf den Elektroden-Platten des Akkumulators intensiviert und somit die Regeneration des Akkumulators verbessert wird.

Diese Aufgabe wird erfindungsgemäß gelöst durch eine Vorrichtung zum Regenerieren von Akkumulatoren, mit einer Hilfsstromquelle, mit einer ersten Leitung zum Verbinden eines ersten Anschluss der Hilfsstromquelle mit einem ersten Anschluss eines Akkumulators, mit einer zweiten Leitung zum Verbinden eines zweiten Anschluss der Hilfsstromquelle mit einem zweiten Anschluss des Akkumulators, mit einem Ladungsspeicher und mit einem Schaltelement, wobei der Ladungsspeicher in der ersten Leitung angeordnet ist und wobei durch das Schaltelement eine elektrische Verbindung von erster Leitung und zweiter Leitung herstellbar ist, so dass durch das Schließen des Schaltelements kurzzeitig eine über der Klemmenspannung des Akkumulators liegende Spannung an diesem anliegt, welche das Ablösen der Schichten auf den Elektroden-Platten des Akkumulators zur Folge hat. Durch den zeitlichen Verlauf, die Spannung und den Strom der Impulse erfolgt eine intensive Regeneration der Akkumulatoren. Die Regeneration kann mit oder ohne gleichzeitige Ladung des

Akkumulators durchgeführt werden. Bei Nickel-Cadmium-Akkumulatoren konnte durch die Regeneration mit der erfindungsgemäßen Vorrichtung die Kapazität der Akkumulatoren sogar über die von baugleichen neuen Akkumulatoren angehoben werden.

Erfindungsgemäß ist in Reihe mit dem Schaltelement eine Induktivität angeordnet, so dass der Stromimpuls, welcher mit dem Spannungsimpuls nach dem Schließen des Schaltelements einhergeht, begrenzt wird und somit Beschädigungen des Akkumulators verhindert werden.

Bei einer Ausgestaltung der Erfindung ist das Schaltelement steuerbar, so dass es möglich ist, automatisch und ohne manuelles Zutun eine Vielzahl von Spannungsimpulsen an den Akkumulator anzulegen und somit eine kontinuierliche Regeneration des Akkumulators auch im Dauerbetrieb zu ermöglichen.

In weiterer Ergänzung der Erfindung ist vorgesehen, dass das Schaltelement als Halbleiterschalter, insbesondere als ein Schalttransistor, ausgebildet ist, so dass mit geringem Kostenaufwand ein leistungsfähiges Schaltelement zur Verfügung steht.

In weiterer Ergänzung der Erfindung ist vorgesehen, dass das Schaltelement durch einen Impulsgenerator, insbesondere einen Trigger, gesteuert wird, so dass die kontinuierliche Regeneration des Akkumulators vollautomatisch und mit hoher Zuverlässigkeit erfolgt.

Bei einer anderen Ergänzung der Erfindung wird die Hilfsstromquelle durch eine oder mehrere Photovoltaik-Zellen, Batterien oder Akkumulatoren oder ein Wechselstromnetz gespeist, so dass je nach Verfügbarkeit eine geeignete Energiequelle zur Verfügung steht.

Weitere Vorteile und vorteilhafte Ausgestaltungen der Erfindung sind der Zeichnung und deren nachfolgenden Beschreibung sowie den Patentansprüchen entnehmbar.

Ein Ausführungsbeispiel des Gegenstands der Erfindung ist in der Zeichnung dargestellt und im Folgenden näher beschrieben. Es zeigen:
- Fig. 1:: eine schematische Darstellung der erfindungsgemäßen Vorrichtung; und
- Fig. 2:: einen Stromlaufplan eines Ausführungsbeispiels einer erfindungsgemäßen Vorrichtung.

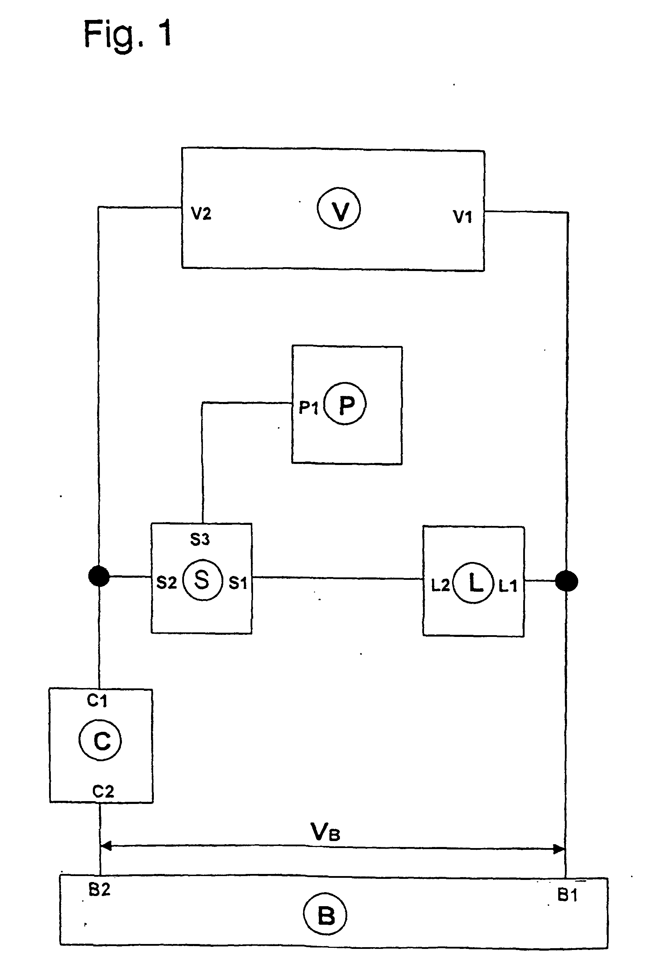

In Fig. 1 ist eine erfindungsgemäße Vorrichtung schematisch dargestellt. Ein Akkumulator B mit den Anschlüssen B1 und B2 ist mit einer Hilfsstromquelle V, die ihrerseits Anschlüsse V1 und V2 aufweist, verbunden. In der Verbindungsleitung, welche den Anschluss V2 mit dem Anschluss B2 verbindet, ist ein Ladungsspeicher C mit seinen Anschlüssen C1 und C2 in Reihe geschaltet. Sobald an der Hilfsstromquelle V eine Spannung anliegt, wird der Ladungsspeicher C geladen.

Durch Schließen eines steuerbaren Schalters S mit den Anschlüssen S1 und S2 sowie dem Steueranschluss S3 wird eine Verbindung zwischen dem Anschluss B2 des Akkumulators B und dem Anschluss C1 des Ladungsspeichers C hergestellt. Sobald diese Verbindung besteht, entlädt sich der Ladungsspeicher C, was zu einem Spannungsimpuls zwischen den Klemmen B1 und B2 führt und außerdem einen Stromimpuls durch den Akkumulator B verursacht. Dieser Stromimpuls hat maßgeblichen Anteil am Ablösen von die Kapazität des Akkumulators B verringernden Schichten auf dessen Elektroden-Platten. Um eine Begrenzung des Maximalstroms zu erreichen, ist eine Induktivität L in Reihe mit dem Ladungsspeicher C geschaltet. Die Induktivität L hat die Ausgänge L1 und L2. Die Hilfsstromquelle V sperrt bei einer Umkehr der Spannung, so dass die gesamte im Ladungsspeicher C gespeicherte Ladung in den Akkumulator B fließt.

Da zur Regeneration eines Akkumulators B eine Vielzahl von Stromimpulsen nötig ist, wird das Schaltelement S von einem Impulsgenerator P mit einem Anschluss P1, der mit dem Steueranschluss S3 des Schaltelements S verbunden ist, getriggert.

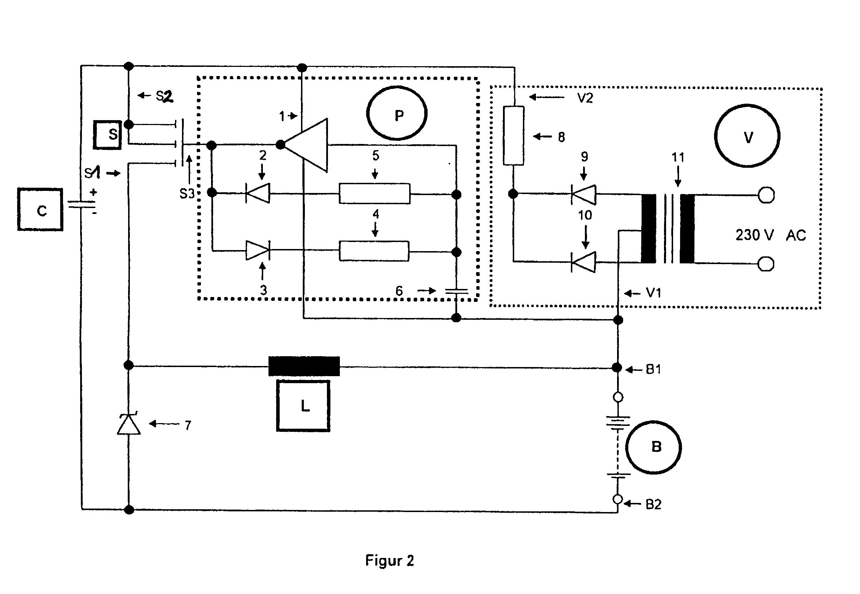

In Fig. 2 ist ein Stromlaufplan eines erfindungsgemäßen Ausführungsbeispieles dargestellt. Die Spannung des als Kondensator ausgeführten Ladungsspeichers C wird durch die Hilfsstromquelle V um 7,6 V gegenüber der anliegenden Akkumulatorspannung erhöht. Es ist jedoch auch möglich, Akkumulatoren mit deutlich niedrigeren Spannung, beispielsweise 2V bei einem 12V Akkumulator, zu regenerieren. Die Dauer der Regeneration nimmt bei Akkumulatoren mit größerer Kapazität zu.

Die Hilfsstromquelle V besteht aus einem Transformator 11, Gleichrichterdioden 9 und 10 sowie einem Strombegrenzungswiderstand 8. Anstelle eines Transformators können zur Stromversorgung auch Photovoltaik-Zellen, ein Akkumulator, beispielsweise der Akkumulator B selbst, oder Batterien eingesetzt werden.

Das Schaltelement S ist als ein Transistor ausgeführt. Gesteuert wird der Transistor S durch einen Impulsgenerator P, welcher aus einem integrierten Stromkreis (IC) mit einem CMOS-Schmitttrigger 1 mit einer Arbeitsfrequenz von 2,789 kH gesteuert wird. Der Impulsgenerator P weist außerdem Dioden 2 und 3, Widerstände 4 und 5 sowie einen Kondensator 6 auf. Durch die Bemessung der Dioden 2 und 3, der Widerstände 4 und 5 sowie des Kondensators 6 kann das Impuls/Pausen-Verhältnis der Schaltung eingestellt werden.

Mit einer seriell zur Induktivität L geschalteten Zener-Diode 7 wird der Schalt-Transistor S gegenüber Über-Spannungen geschützt. Der Impulsgenerator P ist zwischen dem Anschluss V2 und der Kapazität C mit einem Anschluss angeschlossen. Mit einem anderen Anschluss ist der Impulsgenerator P an der in der parallel zur Induktivität verlaufenden Leitung mit der Diode 7 angeschlossen. Der Impulsgenerator P ist in Durchlassrichtung der Diode 7 vor dieser angeschlossen.

Über einen in Fig. 2 nicht dargestellten Shunt-Widerstand mit 0,033 Ohm, der an der Anschlussklemme B1 eingeschleift wird, erfolgt die Strommessung zum Akkumulator B. Wenn das Schaltelement S geschlossen ist, können, da die Spannung des Kondensators C größer als die Spannung des Akkumulators B ist, Stromimpulse aus dem Impulsgenerator P (S-MOS-FET) über den Kondensator C und die Induktivität L in Laderichtung zum Akkumulator B fließen. Die verwendeten Bauteile haben die folgenden Eigenschaften und Bezeichnungen:

### Kurzbezeichnung Wert

- C:: 560µF/35V/LXY
- L:: 160µH/5A
- S:: MTD 20P06HDL
- 1:: MC 14584B
- 2;3:: LL 4148
- 4:: 1 MOhm/0,25 W
- 5:: 56 KOhm/0,25 W
- 6:: 680 pF/50 V
- 7:: SS26 Schottky
- 8:: 3,3 Ohm/2 Watt
- 9;10:: 1N4007
- 11:: 230/2x6 V/2,8 VA

## Patentansprüche

1. Vorrichtung zum Regenerieren von Akkumulatoren, mit einer Hilfsstromquelle (V), mit einer ersten Leitung zum Verbinden eines ersten Anschlusses (V2) der Hilfsstromquelle (V) mit einem ersten Anschluss (B2) eines Akkumulators (B), mit einer zweiten Leitung zum Verbinden eines zweiten Anschlusses (V1) der Hilfsstromquelle (V) mit einem zweiten Anschluss (B1) des Akkumulators (B), mit einem Ladungsspeicher (C), mit einem Schaltelement (S) und mit einer Induktivität (L), **dadurch gekennzeichnet, dass** der Ladungsspeicher (C) in der ersten Leitung angeordnet ist, dass in Reihe mit dem Schaltelement (S) eine Induktivität (L) angeordnet ist, dass über die Serienschaltung von Schaltelement (S) und Induktivität (L) eine elektrische Verbindung von erster Leitung und zweiter Leitung herstellbar ist derart, dass sich der Ladungsspeicher (C) über diese Serienschaltung entlädt, was zu einem Spannungsimpuls zwischen dem ersten und zweiten Anschluss (B1,B2) des Akkumulators (B) führt.

2. Vorrichtung nach Anspruch 1, **dadurch gekennzeichnet, dass** das Schaltelement (S) steuerbar ist.

3. Vorrichtung nach Anspruch 1 oder 2, **dadurch gekennzeichnet, dass** das Schaltelement (S) ein Schalttransistor ist.

4. Vorrichtung nach einem der vorhergehenden Ansprüche, **dadurch gekennzeichnet, dass** das Schaltelement (s) durch einen Impulsgenerator (P), insbesondere einen Trigger (1), gesteuert wird.

5. Vorrichtung nach einem der vorhergehenden Ansprüche, **dadurch gekennzeichnet, dass** die Hilfsstromquelle (V) durch eine oder mehrere Photovoltaik-Zellen, Batterien oder Akkumulatoren oder einem Wechselstromnetz gespeist wird.

6. Vorrichtung nach einem der vorhergehenden Ansprüche, **dadurch gekennzeichnet, dass** als Hilfsstromquelle (V) der zu regenerierende Akkumulator eingesetzt wird.

7. Vorrichtung nach einem der Ansprüche 1 bis 5, **dadurch gekennzeichnet, dass** gleichzeitig mit der Regeneration des Akkumulators (B) eine Ladung desselben vorgenommen wird.

8. Verwendung einer Vorrichtung nach einem der vorhergehenden Ansprüche zur Regeneration von Blei-Akkumulatoren, Nickel-Cadmium-Akkumulatoren, Metall-Hydrid-Akkumulatoren, Nickel-Metall-Hydrid-Akkumulatoren, Lithium-Akkumulatoren.

## Claims

1. Device for regenerating accumulators with an auxiliary current source (V), with first line for joining up a first connection (V2) of the auxiliary current source (V) with a first connection (B2) of an accumulator (B), with a second line for joining up a second connection (V1) of the auxiliary current source (V) with a second connection (B1) of the accumulator (B), with a charge carrier storage (C), with a switching element (S) and with an inductivity (L), **characterised in that** the charge carrier storage (C) is arranged in the first line, that an inductivity (L) is arranged in series with the switching element (S), that an electrical connection of the first line and the second line is capable of being established by way of the series connection of switching element (S) and inductivity (L), in such a way that the charge carrier storage (C) discharges by way of this series connection and this leads to a voltage impulse between the first and second connection (B1, B2) of the accumulator (B).

2. Device according to Claim 1, **characterised in that** the switching element (S) is controllable.

3. Device according to Claim 1 or 2, **characterised in that** the switching element (S) is a switch transistor.

4. Device according to one of the previous Claims, **characterised in that** the switching element (S) is controlled by an impulse generator (P), in particular a trigger (1).

5. Device according to one of the previous Claims, **characterised in that** the auxiliary current source (V) obtains its feed supply from one or several photovoltaic cells, batteries or accumulators.

6. Device according to one of the previous Claims, **characterised in that** the accumulator to be regenerated is applied as an auxiliary current source (V).

7. Device according,to one of the Claims 1 to 5, **characterised in that**, simultaneously with the regeneration of the accumulator (B), a charging of the same is effected.

8. Device according to one of the previous Claims for the regeneration of lead type accumulators, nickel-cadmium accumulators, metal-hydride accumulators, nickel-metal-hydride accumulators, lithium accumulators.

## Revendications

1. Dispositif permettant la régénération d'accumulateurs, avec une source de courant auxiliaire (V), avec un premier circuit permettant de connecter une première borne (V2) de la source de courant auxiliaire (V) à une première borne (B2) d'un accumulateur (B), avec un deuxième circuit permettant de connecter une deuxième borne (V1) de la source de courant auxiliaire (V) à une deuxième borne (B1) de l'accumulateur (B), avec une mémoire de charge (C), avec un élément de couplage (S) et une inductance (L), **caractérisé en ce que** la mémoire de charge (C) est disposée dans le premier circuit, **en ce qu'**une inductance (L) est montée en série avec l'élément de couplage (S), **en ce que**, par l'intermédiaire du branchement en série de l'élément de couplage (S) et de l'inductance (L), on peut fabriquer une connexion électrique entre le premier circuit et le deuxième circuit et **en ce que**, de cette manière, la mémoire de charge (C) se décharge par l'intermédiaire de ce branchement en série, ce qui donne lieu à une impulsion de tension entre la première et la deuxième borne (B1, B2) de l'accumulateur (B).

2. Dispositif selon la revendication 1, **caractérisé en ce que** l'élément de couplage (S) est réglable.

3. Dispositif selon l'une quelconque des revendications 1 ou 2, **caractérisé en ce que** l'élément de couplage (S) est un transistor de couplage.

4. Dispositif selon l'une quelconque des revendications précédentes, **caractérisé en ce que** l'élément de couplage (S) est commandé par l'intermédiaire d'un générateur d'impulsions (P), en particulier un déclencheur (1).

5. Dispositif selon l'une quelconque des revendications précédentes, **caractérisé en ce que** la source de tension auxiliaire (V) est alimentée par l'intermédiaire d'une ou plusieurs cellules photovoltaïques, batteries ou accumulateurs ou un réseau en courant alternatif.

6. Dispositif selon l'une quelconque des revendications précédentes, **caractérisé en ce que**, comme source de courant auxiliaire (V), on utilise un accumulateur pouvant être régénéré.

7. Dispositif selon l'une quelconque des revendications 1 à 5, **caractérisé en ce qu'**on entreprend, parallèlement à la régénération de l'accumulateur (B), un chargement de celui-ci.

8. Utilisation d'un dispositif selon l'une quelconque des revendications précédentes permettant de régénérer des accumulateurs au plomb, accumulateurs nickel - cadmium, accumulateurs à l'hydrure métallique, accumulateurs nickel - hydrure métallique, accumulateurs au lithium.
